(19) Europäisches Patentamt
European Patent Office
Office européen des brevets

(11) EP 0 844 260 A1

(12) **EUROPEAN PATENT APPLICATION**

(43) Date of publication:
**27.05.1998 Bulletin 1998/22**

(51) Int Cl.6: **C08F 10/00**, C08F 4/646, C08F 4/654

(21) Application number: **97309368.5**

(22) Date of filing: **20.11.1997**

(84) Designated Contracting States:
**AT BE CH DE DK ES FI FR GB GR IE IT LI LU MC NL PT SE**
Designated Extension States:
**AL LT LV MK RO SI**

(30) Priority: **20.11.1996 JP 309520/96**

(71) Applicant: **Mitsui Chemicals, Inc.**
**Tokyo 100 (JP)**

(72) Inventors:
- **Hama, Shunichi**
  **Waki-cho, Kuga-gun, Yamaguchi 740 (JP)**
- **Kojoh, Shinichi**
  **Waki-cho, Kuga-gun, Yamaguchi 740 (JP)**

(74) Representative: **Cresswell, Thomas Anthony**
**J.A. KEMP & CO.**
**14 South Square**
**Gray's Inn**
**London WC1R 5LX (GB)**

# (54) Olefin polymerization catalyst, prepolymerized catalyst, and olefin polymerization process

(57) An olefin polymerization catalyst comprising:

(A) a solid titanium catalyst component comprising magnesium, titanium, halogen and either a polycarboxylic acid ester or a polyether,
(B) an organoaluminum compound, and
(C) an organosilane compound of formula (1):

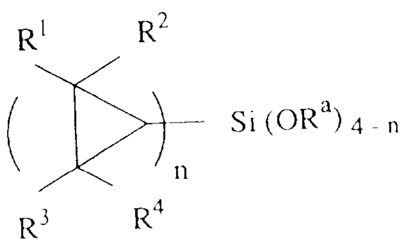

(1)

wherein n is 1 or 2; the groups $R^a$ are the same or different and each is methyl or ethyl; $R^1$, $R^2$, $R^3$ and $R^4$ are the same or different and each is hydrogen, halogen, alkyl, cycloalkyl, aryl, or aralkyl; and one of $R^1$ and $R^2$ together with one of $R^3$ and $R^4$ may form a ring together with the carbons to which they are bonded.

EP 0 844 260 A1

**Description**

FIELD OF THE INVENTION

The present invention relates to olefin polymerization catalysts capable of producing polyolefins having narrow molecular weight distribution and having narrow composition distribution in case of copolymerization. The invention also relates to prepolymerized catalysts and olefin polymerization catalysts both being capable of producing polyolefins of high stereoregularity and good particle properties with high polymerization activities. The invention further relates to processes for olefin polymerization using these catalysts.

BACKGROUND OF THE INVENTION

Ziegler-Natta catalysts comprising a titanium catalyst component and an organoaluminum compound have been widely used hitherto as catalysts for producing polyolefins. In particular, catalysts containing a carrier supported type solid titanium catalyst component as the titanium catalyst component are known to exhibit high polymerization activities. Specifically, a catalyst containing a magnesium chloride supported type titanium catalyst component as the solid titanium catalyst component is known as a catalyst not only exhibiting high polymerization activities but also being capable of producing polyolefins of high stereoregularity when olefins such as propylene and butene are polymerized (said catalyst being sometimes referred to as "high-stereospecificity catalyst" hereinafter) .

Various studies have been made on the catalysts containing a solid titanium catalyst component. For example, there has been proposed use of various electron donors as ingredients for preparing the solid titanium catalyst component or use thereof in the preparation of an olefin polymerization catalyst from the solid titanium catalyst component and an organoaluminum compound.

In Japanese Patent Laid-Open Publication No. 83006/1983 previously applied by the present applicant, an olefin polymerization catalyst comprising a solid titanium catalyst component containing at least a carboxylic acid ester as an inside donor (inside electron donor), an organoaluminum compound and an organosilicon compound having Si-O-C bond or Si-N-C bond as an outside donor (outside electron donor) has been proposed as a catalyst capable of producing high-stereoregularity polyolefins in high yields and capable of producing polyolefins of excellent particle diameter, particle size distribution, particle properties and bulk specific gravity.

Examples of the organosilicon compounds having Si-O-C bond, which are used as the electron donors, include alkoxysilanes, such as tetraethoxysilane, phenyltriethoxysilane and diphenyldimethoxysilane.

In this connection, there has been also proposed an olefin polymerization catalyst using, as an electron donor, an alkoxysilane having a cyclopentyl group, a substituted cyclopentyl group, a cyclopentenyl group, a substituted cyclopentenyl group, a cyclopentadienyl group, a substituted cyclopentadienyl group, or a bulky hydrocarbon group wherein carbon adjacent to Si is secondary carbon or tertiary carbon, e.g., dicyclopentyldimethoxysilane.

Under such circumstances as mentioned above, the present inventor has earnestly studied the olefin polymerization catalysts, and as a result, he has found that an olefin polymerization catalyst formed from a solid titanium catalyst component, an organoaluminum compound and an organosilane compound as an outside electron donor, particularly an alkoxysilane compound having a cyclopropyl group, is able to produce, with high activities, high-stereoregularity polyolefins having narrow molecular weight distribution and having narrow composition distribution in case of copolymerization. The present inventor has also found that: if a prepolymerized catalyst is prepared by polymerizing an olefin onto a solid titanium catalyst component and an organoaluminum compound and from the prepolymerized catalyst an olefin polymerization catalyst is prepared, and if the cyclopropyl group-containing alkoxysilane compound is used as the electron donor in the prepolymerization and/or the polymerization, an olefin can be polymerized with particularly high activities and polyolefins of high stereoregularity and good particle properties can be produced. Based on the finding, the present invention has been accomplished.

OBJECT OF THE INVENTION

It is an object of the present invention to provide an olefin polymerization catalyst by the use of which high-stereoregularity polyolefins having narrow molecular weight distribution and having narrow composition distribution in case of copolymerization can be obtained with high activities. It is another object of the invention to provide a prepolymerized catalyst and an olefin polymerization catalyst by the use of which polyolefins having particularly high stereoregularity and good particle properties can be produced. It is a further object of the invention to provide an olefin polymerization process using any of these catalysts.

SUMMARY OF THE INVENTION

The olefin polymerization catalyst according to the present invention comprises:

(A) a solid titanium catalyst component comprising magnesium, titanium, halogen and either a polycarboxylic acid ester or a polyether,
(B) an organoaluminum compound, and
(C) an organosilane compound represented by the following formula (1):

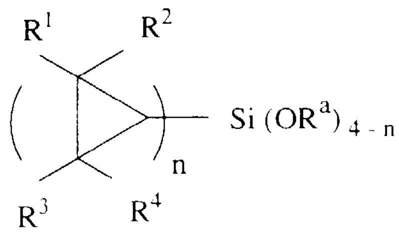

(1)

wherein n is 1 or 2; $OR^a$ is a methoxy group or an ethoxy group; $R^1$, $R^2$, $R^3$ and $R^4$ are each independently hydrogen, halogen, an alkyl group, a cycloalkyl group, an aryl group or an aralkyl group; and either $R^1$ or $R^2$ and either $R^3$ or $R^4$ may form a ring together with carbons to which they are bonded.

The olefin polymerization catalyst according to the invention may be formed from:

[Ia] a prepolymerized catalyst obtained by prepolymerizing an olefin onto an olefin polymerization catalyst comprising the solid titanium catalyst component (A) and the organoaluminum compound (B),
[II] the organosilane compound (C) represented by the above formula (1),

and optionally

[III] the organoaluminum compound (B).

The present invention also provides a prepolymerized catalyst [Ib] obtained by prepolymerizing an olefin onto an olefin polymerization catalyst comprising the solid titanium catalyst component (A), the organoaluminum compound (B) and the organosilane compound (C) represented by the above formula (1).

Above all, an olefin polymerization catalyst comprising the prepolymerized catalyst [Ib], [II] the organosilane compound (C), and optionally, [III] the organoaluminum compound (B) is able to produce polyolefins of particularly high stereoregularity and good particle properties with high polymerization activities.

The olefin polymerization process according to the present invention comprises polymerizing or copolymerizing an olefin in the presence of any of the above-described olefin polymerization catalysts.

BRIEF DESCRIPTION OF THE DRAWINGS

Fig. 1 is an explanatory view showing steps for preparing an olefin polymerization catalyst according to the present invention.

Fig. 2 is an explanatory view showing steps for preparing an olefin polymerization catalyst containing a prepolymerized catalyst [Ib].

DETAILED DESCRIPTION OF THE INVENTION

The olefin polymerization catalyst, the prepolymerized catalyst and the olefin polymerization process according to the present invention are described in detail hereinafter.

The meaning of the term "polymerization" used herein is not limited to "homopolymerization" but may comprehend "copolymerization". Also, the meaning of the term "polymer" used herein is not limited to "homopolymer" but may comprehend "copolymer".

First of all, the solid titanium catalyst component (A) used for forming the olefin polymerization catalyst of the invention is described.

The solid titanium catalyst component for use in the invention contains, as essential ingredients, magnesium, titanium, halogen and either a polycarboxylic acid ester or a polyether. There is no specific limitation on the process for preparing the solid titanium catalyst component, as far as the above ingredients are contained in the resulting solid titanium catalyst component. The solid titanium catalyst component can be prepared by contacting (a-1) a magnesium compound, (a-2) a titanium compound and (a-3) a polycarboxylic acid ester or a polyether in various ways. The ingredients used for preparing the solid titanium catalyst component are described below.

(a-1) Magnesium compound

The magnesium compound employable in the invention includes a magnesium compound having reduction ability and a magnesium compound having no reduction ability.

The magnesium compound having reduction ability is, for example, an organomagnesium compound represented by the following formula:

$$X_nMgR_{2-n}$$

wherein n is a number of $0 \leq n < 2$; R is hydrogen, an alkyl group of 1 to 20 carbon atoms, an aryl group or a cycloalkyl group; when n is 0, two of R may be the same as or different from each other; and X is halogen or an alkoxy group.

Examples of the organomagnesium compounds having reduction ability include:

dialkylmagnesium compounds, such as dimethylmagnesium, diethylmagnesium, dipropylmagnesium, dibutylmagnesium, diamylmagnesium, dihexylmagnesium, didecylmagnesium, octylbutylmagnesium and ethylbutylmagnesium;
alkylmagnesium halides, such as ethylmagnesium chloride, propylmagnesium chloride, butylmagnesium chloride, hexylmagnesium chloride and amylmagnesium chloride;
alkylmagnesium alkoxides, such as butylethoxymagnesium, ethylbutoxymagnesium and octylbutoxymagnesium; and

other compounds, such as butylmagnesium hydride.

Examples of the magnesium compounds having no reduction ability include:

magnesium halides, such as magnesium chloride, magnesium bromide, magnesium iodide and magnesium fluoride;
alkoxymagnesium halides, such as methoxymagnesium chloride, ethoxymagnesium chloride, isopropoxymagnesium chloride, butoxymagnesium chloride and octoxymagnesium chloride;
aryloxymagnesium halides, such as phenoxymagnesium chloride and methylphenoxymagnesium chloride;
alkoxymagnesiums, such as diethoxymagnesium, diisopropoxymagnesium, dibutoxymagnesium, di-n-octoxymagnesium, di-2-ethylhexoxymagnesium and ethoxymethoxymagnesium;
aryloxymagnesiums, such as diphenoxymagnesium and dimethylphenoxymagnesium; and
magnesium carboxylates, such as magnesium laurate and magnesium stearate.

Also employable are magnesium metal and magnesium hydride.

The magnesium compounds having no reduction ability may be compounds derived from the magnesium compounds having reduction ability or compounds derived in the preparation of a catalyst component. For deriving the magnesium compounds having no reduction ability from the magnesium compounds having reduction ability, for example, the magnesium compounds having reduction ability are brought into contact with polysiloxane compounds, halogen-containing silane compounds, halogen-containing aluminum compounds, esters, alcohols, halogen-containing compounds or compounds having OH group or active carbon-to-oxygen bond.

The magnesium compounds having reduction ability or the magnesium compounds having no reduction ability may form complex compounds or double compounds together with other metals, e.g., aluminum, zinc, boron, beryllium, sodium and potassium, or may form mixtures together with other metallic compounds. The magnesium compounds may be used singly or in combination of two or more kinds.

For preparing the solid titanium catalyst component, other magnesium compounds than the above-described ones are employable, but it is preferable that the magnesium compound is present in the form of a halogen-containing magnesium compound in the finally obtained solid titanium catalyst component. Therefore, when a magnesium compound containing no halogen is used, the magnesium compound is preferably contacted with a halogen-containing compound during the course of preparation of the solid titanium catalyst component.

Of the above compounds, preferable are magnesium compounds having no reduction ability, and particularly preferable are halogen-containing magnesium compounds. Of these, magnesium chloride, alkoxymagnesium chloride and aryloxymagnesium chloride are more preferable.

In the preparation of the solid titanium catalyst component, the magnesium compound (a-1) is preferably used in a liquid state.

When the magnesium compound selected from the above compounds is solid, the solid magnesium compound can be made liquid using an electron donor (a-4).

Examples of the electron donors (a-4) include alcohols, phenols, ketones, aldehydes, ethers, amines and pyridines, which will be described later as examples of an electron donor (a-6).

Also employable are metallic acid esters, such as tetraethoxytitanium, tetra-n-propoxytitanium, tetra-i-propoxytitanium, tetrabutoxytitanium, tetrahexoxytitanium, tetrabutoxyzirconium and tetraethoxyzirconium.

Of these, particularly preferably used are alcohols and metallic acid esters.

The reaction of the solid magnesium compound with the electron donor (a-4) is generally carried out by bringing the solid magnesium compound into contact with the electron donor (a-4), followed by heating if necessary. This contact is performed at a temperature of usually 0 to 200 °C, preferably 20 to 180 °C, more preferably 50 to 150 °C.

The above reaction may be carried out in the presence of a hydrocarbon solvent (a-5). Examples of the hydrocarbon solvents include aliphatic hydrocarbons, such as pentane, hexane, heptane, octane, decane, dodecane, tetradecane and kerosine; alicyclic hydrocarbons, such as cyclopentane, methylcyclopentane, cyclohexane, methylcyclohexane, cyclooctane and cyclohexene; halogenated hydrocarbons, such as dichloroethane, dichloropropane, trichloroethylene and chlorobenzene; and aromatic hydrocarbons, such as benzene, toluene and xylene.

(a-2) Titanium compound

In the present invention, a liquid titanium compound, particularly a tetravalent titanium compound, is preferably used as the titanium compound (a-2). The tetravalent titanium compound is, for example, a compound represented by the following formula:

$$Ti(OR)_gX_{4-g}$$

wherein R is a hydrocarbon group, X is a halogen atom, and $0 \leq g \leq 4$.

Examples of such compounds include:

titanium tetrahalides, such as $TiCl_4$, $TiBr_4$ and $TiI_4$;
alkoxytitanium trihalides, such as $Ti(OCH_3)Cl_3$, $Ti(OC_2H_5)Cl_3$, $Ti(O\text{-}n\text{-}C_4H_9)Cl_3$, $Ti(OC_2H_5)Br_3$ and $Ti(O\text{-}iso\text{-}C_4H_9)Br_3$;
dialkoxytitanium dihalides, such as $Ti(OCH_3)_2Cl_2$, $Ti(OC_2H_5)_2Cl_2$, $Ti(O\text{-}n\text{-}C_4H_9)_2Cl_2$ and $Ti(OC_2H_5)_2Br_2$;
trialkoxytitanium monohalides, such as $Ti(OCH_3)_3Cl$, $Ti(OC_2H_5)_3Cl$, $Ti(O\text{-}n\text{-}C_4H_9)_3Cl$ and $Ti(OC_2H_5)_3Br$; and
tetraalkoxytitaniums, such as $Ti(OCH_3)_4$, $Ti(OC_2H_5)_4$, $Ti(O\text{-}n\text{-}C_4H_9)_4$, $Ti(O\text{-}iso\text{-}C_4H_9)_4$ and $Ti(O\text{-}2\text{-}ethylhexyl)_4$.

Of these, preferable are titanium tetrahalides, and particularly preferable is titanium tetrachloride. These titanium compounds may be used in combination of two or more kinds. These titanium compounds may be diluted with hydrocarbons, halogenated hydrocarbons or aromatic hydrocarbons, prior to use.

(a-3) Polycarboxylic acid ester or polyether

In the preparation of the solid titanium catalyst component, a polycarboxylic acid ester or a polyether is used as an electron donor.

The polycarboxylic acid ester is represented by, for example, the following formulas.

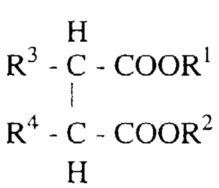 , 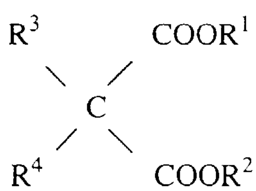 , 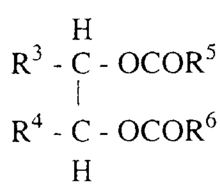

In the above formulas, $R^1$ is a substituted or unsubstituted hydrocarbon group, $R^2$, $R^5$ and $R^6$ are each hydrogen or a substituted or unsubstituted hydrocarbon group, $R^3$ and $R^4$ are each hydrogen or a substituted or unsubstituted hydrocarbon group, and at least one of $R^3$ and $R^4$ is preferably a substituted or unsubstituted hydrocarbon group. $R^3$ and $R^4$ may be bonded to each other to form a cyclic structure. When the hydrocarbon groups $R^1$ to $R^6$ are substituted, the substituents contain hetero atoms such as N, O and S and have groups such as C-O-C, COOR, COOH, OH, $SO_3H$, -C-N-C and $NH_2$.

Examples of the polycarboxylic acid esters include:

aliphatic polycarboxylic acid esters, such as diethyl succinate, dibutyl succinate, diethyl methylsuccinate, diisobutyl α-methylglutarate, diethyl methylmalonate, diethyl ethylmalonate, diethyl isopropylmalonate, diethyl butylmalonate, diethyl phenylmalonate, diethyl diethylmalonate, diethyl dibutylmalonate, monooctyl maleate, dioctyl maleate, dibutyl maleate, dibutyl butylmaleate, diethyl butylmaleate, diisopropyl β-methylglutarate, diallyl ethylsuccinate, di-2-ethylhexyl fumarate, diethyl itaconate and dioctyl citraconate;
alicyclic polycarboxylic acid esters, such as diethyl 1,2-cyclohexanecarboxylate, diisobutyl 1,2-cyclohexanecarboxylate, diethyl tetrahydrophthalate and diethyl nadiate;
aromatic polycarboxylic acid esters, such as monoethyl phthalate, dimethyl phthalate, methylethyl phthalate, monoisobutyl phthalate, diethyl phthalate, ethylisobutyl phthalate, di-n-propyl phthalate, diisopropyl phthalate, di-n-butyl phthalate, diisobutyl phthalate, di-n-heptyl phthalate, di-2-ethylhexyl phthalate, di-n-octyl phthalate, dineopentyl phthalate, didecyl phthalate, benzylbutyl phthalate, diphenyl phthalate, diethyl naphthalenedicarboxylate, dibutyl naphthalenedicarboxylate, triethyl trimellitate and dibutyl trimellitate; and
heterocyclic polycarboxylic acid esters, such as 3,4-furandicarboxylate.

Other examples of the polycarboxylic acid esters are esters of long chain dicarboxylic acids, such as diethyl adipate, diisobutyl adipate, diisopropyl sebacate, di-n-butyl sebacate, di-n-octyl sebacate and di-n-ethylhexyl sebacate.

Of these, particularly preferable are phthalic acid esters. The above polycarboxylic acid esters may be used in combination of two or more kinds.

As the polyether, a polyether compound having two or more ether linkages present through plural atoms can be employed.

The polyether compound is, for example, a compound having two or more atoms selected from carbon, silicon, oxygen, nitrogen, phosphorus, boron and sulfur as the atoms present between the ether linkages. Of such compounds, preferable are those wherein relatively bulky substituents are bonded to the atoms present between the ether linkages and the atoms present between the two or more ether linkages include plural carbon atoms, for example, polyethers represented by the following formula:

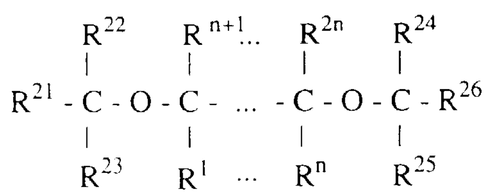

wherein n is an integer of $2 \leq n \leq 10$; $R^1$ to $R^{26}$ are each a substituent having at least one element selected from carbon, hydrogen, oxygen, halogen, nitrogen, sulfur, phosphorus, boron and silicon; an arbitrary combination of $R^1$ to $R^{26}$, preferably $R^1$ to $R^{2n}$, may form, in cooperation, a ring other than a benzene ring; and the main chain may contain an atom other than carbon.

Examples of such polyethers include:

2-(2-ethylhexyl)-1,3-dimethoxypropane,
2-isopropyl-1,3-dimethoxypropane,
2-butyl-1,3-dimethoxypropane,
2-s-butyl-1,3-dimethoxypropane,
2-cyclohexyl-1,3-dimethoxypropane,
2-phenyl-1,3-dimethoxypropane,
2-cumyl-1,3-dimethoxypropane,
2-(2-phenylethyl)-1,3-dimethoxypropane,
2-(2-cyclohexylethyl)-1,3-dimethoxypropane,

2-(p-chlorophenyl)-1,3-dimethoxypropane,
2-(diphenylmethyl)-1,3-dimethoxypropane,
2-(1-naphthyl)-1,3-dimethoxypropane,
2-(2-fluorophenyl)-1,3-dimethoxypropane,
2-(1-decahydronaphthyl)-1,3-dimethoxypropane,
2-(p-t-butylphenyl)-1,3-dimethoxypropane,
2,2-dicylohexyl-1,3-dimethoxypropane,
2,2-dicylopentyl-1,3-dimethoxypropane,
2,2-diethyl-1,3-dimethoxypropane,
2,2-dipropyl-1,3-dimethoxypropane,
2,2-diisopropyl-1,3-dimethoxypropane,
2,2-dibutyl-1,3-dimethoxypropane,
2-methyl-2-propyl-1,3-dimethoxypropane,
2-methyl-2-benzyl-1,3-dimethoxypropane,
2-methyl-2-ethyl-1,3-dimethoxypropane,
2-methyl-2-isopropyl-1,3-dimethoxypropane,
2-methyl-2-phenyl-1,3-dimethoxypropane,
2-methyl-2-cyclohexyl-1,3-dimethoxypropane,
2,2-bis(p-chlorophenyl)-1,3-dimethoxypropane,
2,2-bis(2-cyclohexylethyl)-1,3-dimethoxypropane,
2-methyl-2-isobutyl-1,3-dimethoxypropane,
2-methyl-2-(2-ethylhexyl)-1,3-dimethoxypropane,
2,2-diisobutyl-1,3-dimethoxypropane,
2,2-diphenyl-1,3-dimethoxypropane,
2,2-dibenzyl-1,3-dimethoxypropane,
2,2-bis(cyclohexylmethyl)-1,3-dimethoxypropane,
2,2-diisobutyl-1,3-diethoxypropane,
2,2-diisobutyl-1,3-dibutoxypropane,
2-isobutyl-2-isopropyl-1,3-dimethoxypropane,
2-(1-methylbutyl)-2-isopropyl-1,3-dimethoxypropane,
2-(1-methylbutyl)-2-s-butyl-1,3-dimethoxypropane,
2,2-di-s-butyl-1,3-dimethoxypropane,
2,2-di-t-butyl-1,3-dimethoxypropane,
2,2-dineopentyl-1,3-dimethoxypropane,
2-isopropyl-2-isopentyl-1,3-dimethoxypropane,
2-phenyl-2-isopropyl-1,3-dimethoxypropane,
2-phenyl-2-s-butyl-1,3-dimethoxypropane,
2-benzyl-2-isopropyl-1,3-dimethoxypropane,
2-benzyl-2-s-butyl-1,3-dimethoxypropane,
2-phenyl-2-benzyl-1,3-dimethoxypropane,
2-cyclopentyl-2-isopropyl-1,3-dimethoxypropane,
2-cycylpentyl-2-s-butyl-1,3-dimethoxypropane,
2-cyclohexyl-2-isopropyl-1,3-dimethoxypropane,
2-cyclohexyl-2-s-butyl-1,3-dimethoxypropane,
2-isopropyl-2-s-butyl-1,3-dimethoxypropane,
2-cyclohexyl-2-cyclohexylmethyl-1,3-dimethoxypropane,
2,3-diphenyl-1,4-diethoxybutane,
2,3-dicyclohexyl-1,4-diethoxybutane,
2,2-dibenzyl-1,4-diethoxybutane,
2,3-dicyclohexyl-1,4-diethoxybutane,
2,3-diisopropyl-1,4-diethoxybutane,
2,2-bis(p-methylphenyl)-1,4-dimethoxybutane,
2,3-bis(p-chlorophenyl)-1,4-dimethoxybutane,
2,3-bis(p-fluorophenyl)-1,4-dimethoxybutane,
2,4-diphenyl-1,5-dimethoxypentane,
2,5-diphenyl-1,5-dimethoxyhexane,
2,4-diisopropyl-1,5-dimethoxypentane,
2,4-diisobutyl-1,5-dimethoxypentane,

2,4-diisoamyl-1,5-dimethoxypentane,
3-methoxymethyltetrahydrofuran,
3-methoxymethyldioxane,
1,3-diisobutoxypropane,
1,2-diisobutoxypropane,
1,2-diisobutoxyethane,
1,3-diisoamyloxypropane,
1,3-diisoneopentyloxyethane,
1,3-dineopentyloxypropane,
2,2-tetramethylene-1,3-dimethoxypropane,
2,2-pentamethylene-1,3-dimethoxypropane,
2,2-hexamethylene-1,3-dimethoxypropane,
1,2-bis(methoxymethyl)cyclohexane,
2,8-dioxaspiro[5, 5]undecane,
3,7-dioxabicyclo [3,3,1]nonane,
3,7-dioxabicycylo [3,3,0]octane,
3,3-diisobutyl-1,5-oxononane,
6,6-diisobutyldioxyheptane,
1,1-dimethoxymethylcyclopentane,
1,1-bis(dimethoxymethyl)cyclohexane,
1,1-bis (methoxymethyl)bicyclo[2,2,1]heptane,
1,1-dimethoxymethylcyclopentane,
2-methyl-2-methoxymethyl-1,3-dimethoxypropane,
2-cyclohexyl-2-ethoxymethyl-1,3-diethoxypropane,
2-cyclohexyl-2-methoxymethyl-1,3-dimethoxypropane,
2,2-diisobutyl-1,3-dimethoxycyclohexane,
2-isopropyl-2-isoamyl-1,3-dimethoxycyclohexane,
2-cyclohexyl-2-methoxymethyl-1,3-dimethoxycyclohexane,
2-isopropyl-2-methoxymethyl-1,3-dimethoxycyclohexane,
2-isobutyl-2-methoxymethyl-1,3-dimethoxycyclohexane,
2-cyclohexyl-2-ethoxymethyl-1,3-diethoxycyclohexane,
2-cyclohexyl-2-ethoxymethyl-1,3-dimethoxycyclohexane,
2-isopropyl-2-ethoxymethyl-1,3-diethoxycyclohexane,
2-isopropyl-2-ethoxymethyl-1,3-dimethoxycyclohexane,
2-isobutyl-2-ethoxymethyl-1,3-diethoxycyclohexane, and
2-isobutyl-2-ethoxymethyl-1,3-dimethoxycyclohexane.

Also employable as polyethers are:

tris(p-methoxyphenyl)phosphine,
methylphenylbis (methoxymethyl)silane,
diphenylbis (methoxymethyl)silane,
methylcyclohexylbis (methoxymethyl)silane,
di-t-butylbis(methoxymethyl)silane,
cyclohexyl-t-butylbis(methoxymethyl)silane, and
i-propyl-t-butylbis(methoxymethyl)silane.

Of the above polyethers, preferably used are 1,3-diethers, and particularly preferably used are:

2,2-diisobutyl-1,3-dimethoxypropane,
2-isopropyl-2-isobutyl-1,3-dimethoxypropane,
2-isopropyl-2-isopentyl-1,3-dimethoxypropane,
2,2-dicyclohexyl-1,3-dimethoxypropane,
2,2-bis(cyclohexylmethyl)-1,3-dimethoxypropane,
2-cyclohexyl-2-isopropyl-1,3-dimethoxypropane,
2-isopropyl-2-s-butyl-1,3-dimethoxypropane,
2,2-diphenyl-1,3-dimethoxypropane, and
2-cyclopentyl-2-isopropyl-1,3-dimethoxypropane.

The above polyethers may be used in combination of two or more kinds.

In the preparation of the solid titanium catalyst component, both of the polycarboxylic acid ester and the polyether may be used. Further, other electron donor (a-6) can be used together with the polycarboxylic acid ester or the polyether.

Examples of the other electron donors (a-6) include alcohols, phenols, ketones, aldehydes, carboxylic acids, organic acid halides, organic or inorganic acid esters, ethers, acid amides, acid anhydrides, ammonia, amines, nitriles, isocyanates, nitrogen-containing cyclic compounds and oxygen-containing cyclic compounds. More specifically, there can be mentioned:

alcohols having 1 to 18 carbon atoms, such as methanol, ethanol, propanol, butanol, pentanol, hexanol, 2-ethylhexanol, octanol, dodecanol, octadecyl alcohol, oleyl alcohol, benzyl alcohol, phenylethyl alcohol, cumyl alcohol, isopropyl alcohol and isopropylbenzyl alcohol;
halogen-containing alcohols having 1 to 18 carbon atoms, such as trichloromethanol, trichloroethanol and trichlorohexanol;
phenols having 6 to 20 carbon atoms, which may have a lower alkyl group, such as phenol, cresol, xylenol, ethylphenol, propylphenol, nonylphenol, cumylphenol and naphthol;
ketones having 3 to 15 carbon atoms, such as acetone, methyl ethyl ketone, methyl isobutyl ketone, acetophenone, benzophenone and benzoquinone;
aldehydes having 2 to 15 carbon atoms, such as acetaldehyde, propionaldehyde, octylaldehyde, benzaldehyde, tolualdehyde and naphthaldehyde;
organic acid esters having 2 to 18 carbon atoms, such as methyl formate, methyl acetate, ethyl acetate, vinyl acetate, propyl acetate, octyl acetate, cyclohexyl acetate, ethyl propionate, methyl butyrate, ethyl valerate, methyl chloroacetate, ethyl dichloroacetate, methyl methacrylate, ethyl crotonate, ethyl cyclohexanecarboxylate, methyl benzoate, ethyl benzoate, propyl benzoate, butyl benzoate, octyl benzoate, cyclohexyl benzoate, phenyl benzoate, benzyl benzoate, methyl toluate, ethyl toluate, amyl toluate, ethyl ethylbenzoate, methyl anisate, ethyl anisate, ethyl ethoxybenzoate, γ-butyrolactone, δ-valerolactone, coumarin, phthalide and ethyl carbonate;
acid halides having 2 to 15 carbon atoms, such as acetyl chloride, benzoyl chloride, toluyl chloride and anisoyl chloride;
ethers having 2 to 20 carbon atoms, such as methyl ether, ethyl ether, isopropyl ether, butyl ether, amyl ether, tetrahydrofuran, anisole and diphenyl ether;
acid amides, such as N,N-dimethylacetamide, N,N-diethylbenzamide and N,N-dimethyltoluamide;
amines, such as methylamine, ethylamine, dimethylamine, diethylamine, trimethylamine, triethylamine, tributylamine, tribenzylamine, tetramethylenediamine and hexamethylenediamine;
nitriles, such as acetonitrile, benzonitrile and trinitrile;
acid anhydrides, such as acetic anhydride, phthalic anhydride and benzoic anhydride;
pyrroles, such as pyrrole, methylpyrrole and dimethylpyrrole;
pyrrolines;
pyrrolidines;
indoles;
pyridines, such as pyridine, methylpyridine, ethylpyridine, propylpyridine, dimethylpyridine, ethylmethylpyridine, trimethylpyridine, phenylpyridine, benzylpyridine and pyridine chloride;
nitrogen-containing cyclic compounds, such as piperidines, quinolines and isoquinolines; and
oxygen-containing cyclic compounds, such as tetrahydrofuran, 1,4-cineol, 1,8-cineol, pinolfuran, methylfuran, dimethylfuran, diphenylfuran, benzofuran, coumaran, phthalan, tetrahydropyran, pyran and dihydropyran.

As the electron donor (a-6), an organosilane compound which will be described later as a catalyst component, water, or an anionic, cationic or nonionic surface active agent can be also used.

These electron donors (a-6) may be used in combination of two or more kinds.

<u>Preparation of solid titanium catalyst component (A)</u>

In the preparation of the solid titanium catalyst component, organic or inorganic compounds containing silicon, phosphorus, aluminum, etc., which are generally used as carriers or reaction assisting agents, may be used in addition to the above compounds.

Examples of the carriers include resins, such as $Al_2O_3$, $SiO_2$, $B_2O_3$, MgO, CaO, $TiO_2$, ZnO, $SnO_2$, BaO, ThO and a styrene-divinylbenzene copolymer. Of these, $Al_2O_3$, $SiO_2$ and a styrene-divinylbenzene copolymer are preferably employed.

The solid titanium catalyst component (A) can be prepared by contacting the magnesium compound (a-1), the titanium compound (a-2) and the polycarboxylic acid ester or the polyether (a-3) in accordance with various conventional processes. Though the process for preparing the solid titanium catalyst component (A) is not specifically limited, it is preferable that the magnesium compound (a-1) in a liquid state, the liquid titanium compound (a-2) and the polycarboxylic acid ester or the polyether (a-3) are contacted.

In the contact of the compounds (a-1) to (a-3) to prepare the solid titanium catalyst component, hydrocarbons can be used, if necessary. Examples of the hydrocarbons employable herein include the same hydrocarbons as used for making the magnesium compound (a-1) liquid.

Some examples of the processes for preparing the solid titanium catalyst component are given below. The organoaluminum compound used in the following processes is, for example, the later-described organoaluminum compound (B).

(1) The magnesium compound (a-1) in a liquid state, which comprises a magnesium compound, the electron donor (a-4) and a hydrocarbon solvent, is contacted with the titanium compound (a-2), after or simultaneously with precipitating a solid by contacting the magnesium compound (all) with an organoaluminum compound.

In this process, the polycarboxylic acid ester or the polyether (a-3) (referred to as "electron donor (a-3)" hereinafter) is contacted with the contact product at least once.

(2) A contact product of an inorganic carrier and the organomagnesium compound (a-1) is contacted with the titanium compound (a-2) and the electron donor (a-3).

In this process, the contact product of the inorganic carrier and the organomagnesium compound (a-1) may be preliminarily contacted with a halogen-containing compound and/or an organoaluminum compound.

(3) An inorganic or organic carrier on which a magnesium compound is supported is prepared from a mixture of an inorganic or organic carrier and the magnesium compound (a-1) in a liquid state which comprises a magnesium compound, the electron donor (a-4) and optionally a hydrocarbon solvent. Then, the inorganic or organic carrier on which the magnesium compound is supported is contacted with the titanium compound (a-2).

In this process, the electron donor (a-3) is contacted with the contact product at least once.

(4) A solution containing the magnesium compound (a-1), the titanium compound (a-2), the electron donor (a-4) and optionally a hydrocarbon solvent is contacted with an inorganic or organic carrier and the electron donor (a-3).

(5) The organomagnesium compound (a-1) in a liquid state is contacted with the halogen-containing titanium compound (a-2) and the electron donor (a-3).

(6) The organomagnesium compound (a-1) in a liquid state is contacted with a halogen-containing compound and then contacted with the titanium compound (a-2).

In this process, the electron donor (a-3) is used at least once.

(7) The alkoxy group-containing magnesium compound (a-1) is contacted with the halogen-containing titanium compound (a-2) and the electron donor (a-3).

(8) The magnesium compound (a-1) in a liquid state, which comprises an alkoxy group-containing magnesium compound and the electron donor (a-4), is contacted with the titanium compound (a-2) and the electron donor (a-3).

(9) The magnesium compound (a-1) in a liquid state, which comprises an alkoxy group-containing magnesium compound and the electron donor (a-4), is contacted with an organoaluminum compound and then contacted with the titanium compound (a-2).

In this process, the electron donor (a-3) is contacted with the contact product at least once.

(10) The liquid magnesium compound (a-1) having no reduction ability is contacted with the titanium compound (a-2) in the presence or absence of the electron donor (a-3).

In this process, the electron donor (a-3) is contacted with the contact product at least once.

(11) A reaction product obtained by any of the processes (1) to (10) is further contacted with the titanium compound (a-2).

(12) A reaction product obtained by any of the processes (1) to (11) is further contacted with the electron donor (a-3) and the titanium compound (a-2).

In the above processes, the electron donor (a-6) can be used in the optional stage.

The contact of the components is carried out at a temperature of usually -70 to 200 °C, preferably -50 to 150 °C, more preferably -30 to 130 °C.

The amounts of the components used for preparing the solid titanium catalyst component vary depending on the process used, and they cannot be decided indiscriminately. However, for example, the polycarboxylic acid ester or the polyether (a-3) can be used in an amount of 0.01 to 10 mol, preferably 0.1 to 5 mol, based on 1 mol of the magnesium compound, and the titanium compound (a-2) in a liquid state can be used in an amount of 0.01 to 1,000 mol, preferably 0.1 to 200 mol, based on 1 mol of the magnesium compound.

In the present invention, it is preferable that the solid titanium catalyst component obtained above is washed with a hydrocarbon solvent at 0 to 150 °C.

As the hydrocarbon solvent, the aforesaid hydrocarbon solvent (a-5) used for making the magnesium compound

liquid is employable, and preferably used is an aliphatic hydrocarbon solvent or an aromatic hydrocarbon solvent containing no halogen.

For washing the solid titanium catalyst component, the hydrocarbon solvent can be used in an amount of usually about 10 to 500 ml based on 1 g of the solid.

The solid titanium catalyst component (A) obtained as above comprises magnesium, titanium, halogen and either the polycarboxylic acid ester or the polyether. In the solid titanium catalyst component (A), titanium is contained in an amount of 0.1 to 10 % by weight, preferably 0.2 to 7.0 % by weight; magnesium and halogen are contained in the total amount of 95 to 30 % by weight; and the polycarboxylic acid ester or the polyether is contained in an amount of 0.5 to 30 % by weight.

(B) Organoaluminum compound

The organoaluminum compound used for preparing the olefin polymerization catalyst of the invention is represented by, for example, the following formula:

$$R^a_nAlX_{3-n}$$

wherein $R^a$ is a hydrocarbon group of 1 to 12 carbon atoms, X is halogen or hydrogen, and n is 1 to 3.

$R^a$ is a hydrocarbon group of 1 to 12 carbon atoms, for example, an alkyl group, a cycloalkyl group or an aryl group. Particular examples thereof include methyl, ethyl, n-propyl, isopropyl, isobutyl, pentyl, hexyl, octyl, cyclopentyl, cyclohexyl, phenyl and tolyl.

Examples of such organoaluminum compounds include:

trialkylaluminums, such as trimethylaluminum, triethylaluminum, triisopropylaluminum, triisobutylaluminum, trioctylaluminum and tri-2-ethylhexylaluminum;
alkenylaluminums, such as isoprenylaluminum;
dialkylaluminum halides, such as dimethylaluminum chloride, diethylaluminum chloride, diisopropylaluminum chloride, diisobutylaluminum chloride and dimethylaluminum bromide;
alkylaluminum sesquihalides, such as methylaluminum sesquichoride, ethylaluminum sesquichloride, isopropylaluminum sesquichloride, butylaluminum sesquichloride and ethylaluminum sesquibromide;
alkylaluminum dihalides, such as methylaluminum dichloride, ethylaluminum dichloride, isopropylaluminum dichloride and ethylaluminum dibromide; and
alkylaluminum hydrides, such as diethylaluminum hydride and diisobutylaluminum hydride.

Also employable as the organoaluminum compound is a compound represented by the following formula:

$$R^a_nAlY_{3-n}$$

wherein $R^a$ is the same as above; Y is $-OR^b$ group, $-OSiR^c_3$ group, $-OAlR^d_2$ group, $-NR^e_2$ group, $-SiR^f_3$ group or $-N(R^g)AlR^h_2$ group; n is 1 to 2; $R^b$, $R^c$, $R^d$ and $R^h$ are each methyl, ethyl, isopropyl, isobutyl, cyclohexyl, phenyl or the like; $R^e$ is hydrogen, methyl, ethyl, isopropyl, phenyl, trimethylsilyl or the like; and $R^f$ and $R^g$ are each methyl, ethyl or the like.

Examples of such organoaluminum compounds include:

(i) compounds of the formula $R^a_nAl(OR^b)_{3-n}$, e.g., dimethylaluminum methoxide, diethylaluminum ethoxide and diisobutylaluminum methoxide;
(ii) compounds of the formula $R^a_nAl(OSiR^c)_{3-n}$, e.g., $Et_2Al(OSiMe_3)$, $(iso\text{-}Bu)_2Al(OSiMe_3)$ and $(iso\text{-}Bu)_2Al(OSiEt_3)$;
(iii) compounds of the formula $R^a_nAl(OAlR^d_2)_{3-n}$, e.g., $Et_2AlOAlEt_2$ and $(iso\text{-}Bu)_2AlOAl(iso\text{-}Bu)_2$;
(iv) compounds of the formula $R^a_nAl(NR^e_2)_{3-n}$, e.g., $Me_2AlNEt_2$, $Et_2AlNHMe$, $Me_2AlNHEt$, $Et_2AlN(Me_3Si)_2$ and $(iso\text{-}Bu)_2AlN(Me_3Si)_2$;
(v) compounds of the formula $R^a_nAl(SiR^f_3)_{3-n}$, e.g., $(iso\text{-}Bu)_2AlSiMe_3$; and
(vi) compounds of the formula $R^a_nAl[N(R^g)\text{-}AlR^h_2]_{3-n}$, e.g., $Et_2AlN(Me)\text{-}AlEt_2$ and $(iso\text{-}Bu)_2AlN(Et)Al(iso\text{-}Bu)_2$.

Further, compounds analogous to the above compounds, e.g., organoaluminum compounds wherein two or more aluminum atoms are linked through an oxygen atom or a nitrogen atom, are also employable. Examples of such compounds include $(C_2H_5)_2AlOAl(C_2H_5)_2$, $(C_4H_9)_2AlOAl(C_4H_9)_2$ and $(C_2H_5)_2AlN(C_2H_5)Al(C_2H_5)_2$.

Aluminoxanes such as methylaluminoxane can be also employed.

Of the organoaluminum compounds mentioned above, preferable are those represented by the formulas $R^a_3Al$, $R^a_nAl(OR^b)_{3-n}$ and $R^a_nAl(OAlR^d_2)_{3-n}$.

Also employable as the organoaluminum compound is an alkyl complex compound represented by the following formula:

$$M^1AlR^j_4$$

wherein $M^1$ is Li, Na or K, and $R^j$ is a hydrocarbon group of 1 to 15 carbon atoms.

Examples of such compounds include $LiAl(C_2H_5)_4$ and $LiAl(C_7H_{15})_4$.

The organoaluminum compounds mentioned above may be used in combination of two or more kinds.

(C) Organosilane compound

In the preparation of the olefin polymerization catalyst of the invention, a cyclopropyl group-containing organosilane compound represented by the following formula (1) is used together with the solid titanium catalyst component (A) and the organoaluminum compound (B).

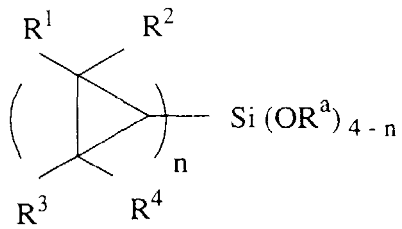

(1)

wherein n is 1 or 2; $OR^a$ is a methoxy group or an ethoxy group; $R^1$, $R^2$, $R^3$ and $R^4$ are each independently hydrogen, halogen, an alkyl group, a cycloalkyl group, an aryl group or an aralkyl group; and either $R^1$ or $R^2$ and either $R^3$ or $R^4$ may form a ring together with carbons to which they are bonded.

As the organosilane compounds, there can be mentioned, for example, the following compounds (C-1):

dicyclopropyldimethoxysilane,
di(2-bromo-2-methylcyclopropyl)dimethoxysilane,
di(2-methylcyclopropyl)dimethoxysilane,
di(2-ethylcyclopropyl)dimethoxysilane,
di(2,3-dimethylcyclopropyl)dimethoxysilane,
di(2,3-diethylcyclopropyl)dimethoxysilane,
di(2-cyclopropylcyclopropyl)dimethoxysilane,
di(2-cyclopropyl-2-methylcyclopropyl)dimethoxysilane,
cyclopropyl-2-methylcyclopropyldimethoxysilane,
2-ethylcyclopropyl-2-methylcyclopropyldimethoxysilane,
cyclopropyltrimethoxysilane,
2-bromo-2-methylcyclopropyltrimethoxysilane,
2-methylcyclopropyltrimethoxysilane,
2-ethylcyclopropyltrimethoxysilane,
2,3-dimethylcyclopropyltrimethoxysilane,
2,3-diethylcyclopropyltrimethoxysilane,
(2-cyclopropylcyclopropyl)trimethoxysilane,
(2-cyclopropyl-2-methylcyclopropyl)trimethoxysilane,
dicyclopropyldiethoxysilane,
di(2-bromo-2-methylcyclopropyl)diethoxysilane,
di(2-methylcyclopropyl)diethoxysilane,
di(2-ethylcyclopropyl)diethoxysilane,
di(2,3-dimethylcyclopropyl)diethoxysilane,
di(2,3-diethylcyclopropyl)diethoxysilane,

di(2-cyclopropylcyclopropyl)diethoxysilane,
di(2-cyclopropyl-2-methylcyclopropyl)diethoxysilane,
cyclopropyltriethoxysilane,
2-bromo-2-methylcyclopropyltriethoxysilane,
2-methylcyclopropyltriethoxysilane,
2-ethylcyclopropyltriethoxysilane,
2,3-dimethylcyclopropyltriethoxysilane,
2,3-diethylcyclopropyltriethoxysilane,
(2-cyclopropylcyclopropyl)triethoxysilane,
cyclopropyl-2-methylcyclopropyldiethoxysilane, and
2-ethylcyclopropyl-2-methylcyclopropyldiethoxysilane.

Also employable are the following organosilane compounds (C-2) having a group wherein an alkyl group or alkyl groups bonded to the cyclopropyl group form a polycyclic ring together with the cyclopropyl group:

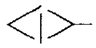 $Si(OCH_3)_3$ (bicyclo[1.1.0]-2-butyl)trimethoxysilane,

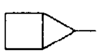 $Si(OCH_3)_3$ (bicyclo[2.1.0]-5-pentyl)trimethoxysilane,

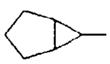 $Si(OCH_3)_3$ (bicyclo[3.1.0]-6-hexyl)trimethoxysilane,

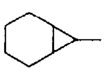 $Si(OCH_3)_3$ (bicyclo[4.1.0]-7-heptyl)trimethoxysilane,

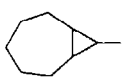 $Si(OCH_3)_3$ (bicyclo[5.1.0]-8-octyl)trimethoxysilane,

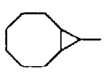 $Si(OCH_3)_3$ (bicyclo[6.1.0]-9-decanyl)trimethoxysilane,

di(bicyclo[1.1.0]-2-butyl)dimethoxysilane,
di(bicyclo[2.1.0]-5-pentyl)dimethoxysilane,
di(bicyclo[3.1.0]-6-hexyl)dimethoxysilane,
di(bicyclo[4.1.0]-7-heptyl)dimethoxysilane,
di(bicyclo[5.1.0]-8-octyl)dimethoxysilane,
di(bicyclo[6.1.0]-9-decanyl)dimethoxysilane,
(bicyclo[1.1.0]-2-butyl)triethoxysilane,
(bicyclo[2.1.0]-5-pentyl)triethoxysilane,
(bicyclo[3.1.0]-6-hexyl)triethoxysilane,
(bicyclo[4.1.0]-7-heptyl)triethoxysilane,
(bicyclo[5.1.0]-8-octyl)triethoxysilane,
(bicyclo[6.1.0]-9-decanyl)triethoxysilane,
di(bicyclo[1.1.0]-2-butyl)diethoxysilane,
di(bicyclo[2.1.0]-5-pentyl)diethoxysilane,
di(bicyclo[3.1.0]-6-hexyl)diethoxysilane,
di(bicyclo[4.1.0]-7-heptyl)diethoxysilane,
di(bicyclo[5.1.0]-8-octyl)diethoxysilane, and

di(bicyclo[6.1.0]-9-decanyl)diethoxysilane.

Of the above compounds, the compounds (C-1) are preferable, and dicyclopropyldimethoxysilane is particularly preferable.

Olefin polymerization catalyst

The olefin polymerization catalyst of the invention is formed from:

(A) the solid titanium catalyst component,
(B) the organoaluminum compound, and
(C) the organosilane compound represented by the formula (1).

Fig. 1 shows steps for preparing the olefin polymerization catalyst.

In the present invention, olefins may be pre(co)polymerized onto the above catalyst components. Specifically, a prepolymerized catalyst [Ib] wherein an olefin is prepolymerized onto an olefin polymerization catalyst comprising the solid titanium catalyst component (A), the organoaluminum compound (B) and the organosilane compound (C) represented by the formula (1) is provided.

According to the present invention, the olefin polymerization catalyst containing a prepolymerized catalyst can be formed from:

[Ib] the prepolymerized catalyst, or [Ia] a prepolymerized catalyst wherein an olefin is prepolymerized onto an olefin polymerization catalyst comprising the solid titanium catalyst component (A) and the organoaluminum compound (B);
[II] the organosilane compound (C) represented by the formula (1);

and optionally

[III] the organoaluminum compound (B).

Fig. 2 shows steps for preparing the olefin polymerization catalyst containing the prepolymerized catalyst [Ib].

In the prepolymerization, other electron donors can be used, if needed.

Examples of the other electron donors include:

the aforesaid polyether compounds;
2,6-substituted piperidines;
2,5-substituted piperidines;
substituted methylenediamines, such as N,N,N',N'-tetramethylmethylenediamine and N,N,N',N'-tetraethylmethylenediamine;
nitrogen-containing electron donors, e.g., substituted imidazolidines, such as 1,3-dibenzylimidazolidine and 1,3-dibenzyl-2-phenylimidazolidine;
phosphorus-containing electron donors, e.g., phosphites, such as triethyl phosphite, tri-n-propyl phosphite, triisopropyl phosphite, tri-n-butyl phosphite, triisobutyl phosphite, diethyl-n-butyl phosphite and diethylphenyl phosphite; and
oxygen-containing electron donors, such as 2,6-substituted tetrahydropyrans and 2,5-substituted tetrahydropyrans.

As the electron donors, organosilane compounds other than the compound (C) are also employable. Examples of such organosilane compounds include trimethylmethoxysilane, trimethylethoxysilane, dimethyldimethoxysilane, dimethyldiethoxysilane, diisopropyldimethoxysilane, t-butylmethyldimethoxysilane, t-butylmethyldiethoxysilane, t-amylmethyldiethoxysilane, diphenyldimethoxysilane, phenylmethyldimethoxysilane, diphenyldiethoxysilane, bis-o-tolyldimethoxysilane, bis-m-tolyldimethoxysilane, bis-p-tolyldimethoxysilane, bis-p-tolyldiethoxysilane, bisethylphenyldimethoxysilane, ethyltrimethoxysilane, ethyltriethoxysilane, vinyltrimethoxysilane, methyltrimethoxysilane, n-proyltriethoxysilane, decyltrimethoxysilane, decyltriethoxysilane, phenyltrimethoxysilane, γ-chloropropyltrimethoxysilane, methyltriethoxysilane, ethyltriethoxysilane, vinyltriethoxysilane, n-butyltriethoxysilane, phenyltriethoxysilane, γ-aminopropyltriethoxysilane, chlorotriethoxysilane, ethyltriisopropoxysilane, vinyltributoxysilane, trimethylphenoxysilane, methyltriallyloxysilane, vinyltris(β-methoxyethoxysilane), vinyltriacetoxysilane, dimethyltetraethoxydisiloxane, ethyl silicate and butyl silicate.

Also employable are organosilane compounds having a bulky group, which are represented by the following formula (2):

$$R^a_n si(OR^b)_{4-n} \qquad (2)$$

wherein n is 1, 2 or 3; when n is 1, $R^a$ is a secondary or tertiary hydrocarbon group; when n is 2 or 3, at least one of $R^a$ is a secondary or tertiary hydrocarbon group, $R^a$ may be the same as or different from each other; $R^b$ is a hydrocarbon group of 1 to 4 carbon atoms; when 4-n is 2 or 3, $OR^b$ may be the same as or different from each other.

The organosilane compound (C) is not included in the compounds represented by the formula (2).

In the organosilane compound of the formula (2) having a bulky group, the secondary or tertiary hydrocarbon group is, for example, cyclopentyl, cyclopentenyl, cyclopentadienyl, substituted cyclopentyl, substituted cyclopentenyl, substituted cyclopentadienyl or a hydrocarbon group wherein carbon adjacent to Si is secondary or tertiary carbon.

Examples of such organosilane compounds include dicyclopentyldimethoxysilane, di-t-butyldimethoxysilane, di (2-methylcyclopentyl)dimethoxysilane, di(3-methylcyclopentyl)dimethoxysilane and di-t-amyldimethoxysilane.

The above compounds may be used in combination of two or more kinds.

Examples of the olefins used in the prepolymerization include α-olefins of 2 or more carbon atoms, such as ethylene, propylene, 1-butene, 1-pentene, 1-hexene, 3-methyl-1-butene, 3-methyl-1-pentene, 3-ethyl-1-pentene, 4-methyl-1-pentene, 4,4-dimethyl-1-pentene, 4-methyl-1-hexene, 4,4-dimethyl-1-hexene, 4-ethyl-1-hexene, 3-ethyl-1-hexene, 1-octene, 1-decene, 1-dodecene, 1-tetradecene, 1-hexadecene, 1-octadecene and 1-eicosene. The later-described vinyl compounds and polyene compounds are also employable in the prepolymerization. These olefins and compounds may be used in combination of two or more kinds.

The α-olefin used in the prepolymerization may be the same as or different from the later-described α-olefin used in the polymerization.

There is no specific limitation on the manner to perform prepolymerization. For example, the prepolymerization can be carried out in such a manner that the olefins and the polyene compounds become liquid, or can be carried out in the presence of an inert solvent or in a gas phase. It is preferable that the prepolymerization is conducted in the presence of an inert solvent and that the olefins and the catalyst components are added to the inert solvent and the prepolymerization is performed under relatively mild conditions. In this case, the prepolymerization may be performed under such conditions that the resulting prepolymer is dissolved or not dissolved in a polymerization medium, but preferably the prepolymerization is performed under such conditions that the prepolymer is not dissolved.

The prepolymerization is desirably carried out at a temperature of usually about -20 to +100 °C, preferably about -20 to +80 °C, more preferably about -10 to +40 °C.

The prepolymerization can be carried out by any of batchwise, semi-continuous and continuous processes.

The catalyst concentration in the prepolymerization system may be higher than that in the polymerization system.

In the prepolymerization, the concentrations of the catalyst components vary depending on the types of the catalyst components used, but it is desired that the concentration of the solid titanium catalyst component (A) is in the range of usually about 0.001 to 5,000 mmol, preferably about 0.01 to 1,000 mmol, particularly preferably 0.1 to 500 mmol, in terms of titanium atom, based on 1 liter of the polymerization solution.

The organoaluminum compound (B) can be used in an amount of usually about 0.1 to 1,000 mol, preferably about 0.5 to 500 mol, particularly preferably 1 to 100 mol, based on 1 mol of the titanium atom in the solid titanium catalyst component.

In the prepolymerization, the electron donor can be used, if necessary, in an amount of usually 0.01 to 50 mol, preferably 0.05 to 30 mol, more preferably 0.1 to 10 mol, based on 1 mol of the titanium atom in the solid titanium catalyst component (A).

A molecular weight modifier such as hydrogen may be used in the prepolymerization.

In the prepolymerization, the pre(co)polymer is produced in an amount of 0.01 to 2,000 g, preferably 0.03 to 1,000 g, more preferably 0.05 to 200 g, based on 1 g of the solid titanium catalyst component (A).

When the prepolymerized catalyst is obtained in the form of a suspension, the prepolymerized catalyst can be used as it is in the subsequent polymerization or it can be used after separated from the suspension.

The olefin polymerization catalyst of the invention may contain other components useful for the olefin polymerization than the above-described ones.

Olefin polymerization process

In the olefin polymerization process according to the invention, an olefin is polymerized or copolymerized in the presence of the olefin polymerization catalyst comprising the solid titanium catalyst component (A), the organoaluminum compound (B) and the specific organosilane compound (C) represented by the formula (1), or in the presence of the olefin polymerization catalyst comprising the prepolymerized catalyst [Ia] or [Ib], the organosilane compound [II] and optionally the organoaluminum compound [III]. According to the process of the invention using the olefin polymerization catalyst, an olefin can be polymerized with high activity to produce high-stereoregularity polyolefins.

Especially when the olefin polymerization catalyst formed from the solid titanium catalyst component (A), the organoaluminum compound (B) and the specific organosilane compound (C) or the olefin polymerization catalyst formed from the prepolymerized catalyst [Ia], the organosilane compound [II] and optionally the organoaluminum compound [III] is used, polyolefins having narrow molecular weight distribution and having narrow composition distribution in case of copolymerization can be obtained.

When the olefin polymerization catalyst formed from the prepolymerized catalyst [Ib], the organosilane compound [II] and optionally the organoaluminum compound [III] is used, polyolefins having high stereoregularity and good particle properties can be produced with particularly high activities.

As the olefins, the same α-olefins of 2 or more carbon atoms as used in the prepolymerization can be employed.

Also employable are:

cycloolefins, such as cyclopentene, cycloheptene, norbornene, 5-ethyl-2-norbornene, tetracyclododecene and 2-ethyl-1,4,5,8-dimethano-1,2,3,4,4a,5,8,8a-octahydronaphthalene; and
vinyl compounds, such as styrene, dimethylstyrenes, allylnaphthalene, allylnorbornane, vinylnaphthalenes, allyltoluenes, allylbenzene, vinylcyclopentane, vinylcyclohexane, vinylcycloheptane and allyltrialkylsilanes.

Of these, preferably used are ethylene, propylene, 1-butene, 3-methyl-1-butene, 3-methyl-1-pentene, 4-methyl-1-pentene, vinylcyclohexane, dimethylstyrene, allyltrimethylsilane and allylnaphthalene.

A small amount of a diene compound may be copolymerized with the olefins.

Examples of the diene compounds include 1,3-butadiene, 1,3-pentadiene, 1,4-pentadiene, 1,3-hexadiene, 1,4-hexadiene, 1,5-hexadiene, 4-methyl-1,4-hexadiene, 5-methyl-1,4-hexadiene, 6-methyl-1,6-octadiene, 7-methyl-1,6-octadiene, 6-ethyl-1,6-octadiene, 6-propyl-1,6-octadiene, 6-butyl-1,6-octadiene, 6-methyl-1,6-nonadiene, 7-methyl-1,6-nonadiene, 6-ethyl-1,6-nonadiene, 7-ethyl-1,6-nonadiene, 6-methyl-1,6-decadiene, 7-methyl-1,6-decadiene, 6-methyl-1,6-undecadiene, 1,7-octadiene, 1,9-decadiene, isoprene, butadiene, ethylidene norbornene, vinylnorbornene and dicyclopentadiene. These compounds may be used in combination of two or more kinds.

In the present invention, the polymerization can be performed as liquid phase polymerization such as solution polymerization or suspension polymerization, or as gas phase polymerization.

When the polymerization reaction is performed as slurry polymerization, the aforesaid inert organic solvent can be used as a reaction solvent, or an olefin which is liquid at the reaction temperature can be used.

In the polymerization, the solid titanium catalyst component (A) or the prepolymerized catalyst [Ia] or [Ib] is used in an amount of usually about 0.001 to 100 mmol, preferably about 0.005 to 20 mmol, in terms of titanium atom, based on 1 liter of the polymerization solution.

The organoaluminum compound (B) (or [III]) is used in such an amount that the amount of the metal atom in the compound (B) becomes usually about 1 to 2,000 mol, preferably about 2 to 500 mol, based on 1 mol of the titanium atom in the polymerization system.

When the prepolymerized catalyst is used, the organoaluminum compound [III] has not to be used according to circumstances.

The organosilane compound (C) (or [II]) can be used in an amount of usually about 0.001 to 10 mol, preferably 0.01 to 5 mol, based on 1 mol of the metal atom in the organoaluminum compound (B).

If hydrogen is used in the polymerization, a molecular weight of the resulting polymer can be modified, and a polymer having a high melt flow rate can be obtained.

In the olefin polymerization process according to the invention, the polymerization temperature is in the range of usually about 20 to 300 °C, preferably about 50 to 150 °C, and the polymerization pressure is in the range of atmospheric pressure to 100 kg/cm$^2$, preferably about 2 to 50 kg/cm$^2$, though they vary depending on the kind of the olefin, the type of polymerization, etc.

In the process of the invention, the polymerization can be carried out batchwise, semi-continuously or continuously. Further, the polymerization can be carried out in two or more stages under different reaction conditions.

In the present invention, a homopolymer of an olefin may be prepared, or a random copolymer or a block copolymer may be prepared from two or more kinds of olefins.

## EFFECT OF THE INVENTION

According to the present invention using the specific organosilane compound as an outside electron donor, polyolefins having narrow molecular weight distribution and having narrow composition distribution in case of copolymerization can be obtained.

Further, polyolefins having high stereoregularity and good particle properties can be produced with particularly high polymerization activities.

## EXAMPLE

The present invention is further described with reference to the following examples, but it should be construed that the invention is in no way limited to those examples.

In the following examples and the comparative examples, the boiling heptane extraction residue, i.e., index of stereoregularity of polyolefin, was determined by subjecting the polyolefin to Soxhlet's extraction with boiling heptane until a constant extraction residue was reached.

The 23°C n-decane-soluble component quantity in polyolefin was measured in the following manner.

Into a 1 liter flask, 3 g of a sample (polyolefin), 20 mg of 2,6-di-tert-butyl-4-methylphenol and 500 ml of n-decane were introduced, and they were heated at 145 °C to dissolve the sample. After the dissolving, the resulting solution was cooled to 23 °C over a period of 8 hours and maintained at 23 °C for 8 hours to precipitate a solid. The solid was separated from the n-decane solution containing a dissolved polymer by filtration using a glass filter. The liquid phase was dried at 150 °C under reduced pressure until a constant weight was reached, and the weight was measured. The percentage of the weight of the dissolved polymer thus measured to the weight of the sample was calculated, and the obtained percentage was regarded as the 23°C decane-soluble component quantity in the polyolefin (polypropylene).

The melt flow rate (MFR) was measured at 230 °C under a load of 2.16 kg in accordance with ASTM D1238.

The weight-average molecular weight (Mw) and the number-average molecular weight (Mn) were determined by GPC.

The bulk specific gravity (bulk density) of the polyolefin was measured in accordance with JIS K6721.

### Example 1

#### Preparation of solid titanium catalyst component

95.2 Grams of anhydrous magnesium chloride, 442 ml of decane and 390.6 g of 2-ethylhexyl alcohol were heated at 130 °C for 2 hours to give a homogeneous solution. To the solution was added 21.3 g of phthalic anhydride, and they were stirred at 130 °C for 1 hour to dissolve the phthalic anhydride in the solution.

The resulting homogeneous solution was cooled to room temperature, and 30 ml of this homogeneous solution was dropwise added to 80 ml of titanium tetrachloride ($TiCl_4$, maintained at -20 °C) over a period of 1 hour.

The temperature of the resulting mixture was elevated to 110 °C over a period of 4 hours. When the temperature reached 110 °C, to the mixture was added 2.1 g of diisobutyl phthalate (DIBP), followed by stirring at the same temperature for 2 hours.

After completion of the reaction, the resulting solid was recovered by hot filtration. The solid was resuspended in 110 ml of $TiCl_4$, and the suspension was heated again at 110 °C for 2 hours. After completion of the reaction, the resulting solid was recovered again by hot filtration. The solid was sufficiently washed with decane of 110 °C and hexane until no titanium compound was detected in the washing liquid.

The solid titanium catalyst component thus obtained was stored as a hexane slurry. A part of the hexane slurry of the solid titanium catalyst component was withdrawn and dried to analyze composition about the catalyst components.

The solid titanium catalyst component consisted of 2.2 % by weight of titanium, 19.0 % by weight of magnesium, 59.0 % by weight of chlorine and 19.8 % by weight of DIBP.

#### Polymerization

Into a 1 liter autoclave, 400 ml of purified heptane was introduced, and then 0.4 mmol of triethylaluminum, 0.4 mmol of dicyclopropyldimethoxysilane and 0.008 mmol (in terms of titanium atom) of the solid titanium catalyst component obtained above were introduced at 60 °C in a propylene atmosphere.

Then, 100 ml of hydrogen was fed, and the system was heated to 70 °C and maintained at this temperature for 1 hour to perform polymerization of propylene. During the polymerization, the pressure was kept at 5 kg/cm$^2$-G. After completion of the polymerization, the slurry containing a polymer (solid) produced was filtered to separate the slurry into a white powder and a liquid phase.

The yield of a polymer obtained as the white powder was 36.6 g. Though the liquid phase was concentrated, no solvent-soluble polymer was obtained. Therefore, the polymerization activity was 4,580 g-PP/mmol-Ti and was 2,100 g-PP/g-cat.

This powdery polymer (polypropylene) had a boiling-heptane extraction residue (t-II) of 99.1 % by weight, a 23°C

n-decane-soluble component quantity (t-DS) of 0.58 % by weight, a melt flow rate (MFR) of 1.49 g/10 min, a weight-average molecular weight (Mw), as measured by GPC, of $3.67 \times 10^5$, and Mw/Mn of 3.24. The results are set forth in Table 1.

## Comparative Example 1

### Polymerization

Polymerization of propylene was carried out in the same manner as in Example 1, except that dicyclopentyldimethoxysilane was used in place of the dicyclopropyldimethoxysilane.

The yield of the white powder polymer was 70.8 g. Concentration of the liquid phase resulted in 0.2 g of a solvent-soluble polymer.

The polymerization activity of the whole polymer obtained, boiling-heptane extraction residue (t-II), 23°C n-decane-soluble component quantity (t-DS), melt flow rate (MFR) and Mw/Mn are set forth in Table 1.

## Comparative Example 2

### Polymerization

Polymerization of propylene was carried out in the same manner as in Example 1, except that cyclohexylmethyldimethoxysilane was used in place of the dicyclopropyldimethoxysilane.

The yield of the white powder polymer was 39.8 g. Concentration of the liquid phase resulted in 0.2 g of a solvent-soluble polymer.

The polymerization activity of the whole polymer obtained, boiling-heptane extraction residue (t-II), 23°C n-decane-soluble component quantity (t-DS), melt flow rate (MFR) and Mw/Mn are set forth in Table 1.

## Example 2

### Preparation of prepolymerized catalyst

Into a 200 ml four-necked glass reactor equipped with a stirrer, 100 ml of purified hexane was introduced in a nitrogen atmosphere, and then 3 mmol of triethylaluminum and 1.0 mmol (in terms of titanium atom) of the solid titanium catalyst component obtained in Example 1 were introduced. Thereafter, propylene was fed at a feed rate of 3.2 N-liter/hr at 20 °C for 1 hour.

After feeding of propylene, the reactor was purged with nitrogen, and a washing operation consisting of removal of a supernatant liquid and washing with purified hexane was carried out twice. The resulting prepolymerized catalyst was resuspended in purified hexane, and the whole amount of the suspension was transferred into a catalyst bottle.

### Polymerization

Polymerization of propylene was carried out in the same manner as in Example 1, except that the prepolymerized catalyst obtained above was used in place of the solid titanium catalyst component.

The polymer was obtained as a white powder. Though the liquid phase was concentrated, no solvent-soluble polymer was obtained.

The polymerization activity of the whole polymer obtained, boiling-heptane extraction residue (t-II), 23°C n-decane-soluble component quantity (t-DS), melt flow rate (MFR) and Mw/Mn are set forth in Table 1.

## Comparative Example 3

### Polymerization

Polymerization of propylene was carried out in the same manner as in Example 2, except that dicyclopentyldimethoxysilane was used in place of the dicyclopropyldimethoxysilane.

The yield of the white powder polymer was 78.9 g. Concentration of the liquid phase resulted in 0.2 g of a solvent-soluble polymer.

The polymerization activity of the whole polymer obtained, boiling-heptane extraction residue (t-II), 23°C n-decane-soluble component quantity (t-DS), melt flow rate (MFR) and Mw/Mn are set forth in Table 1.

Table 1

| | Polymerization activity | | t-II (wt%) | t-DS (wt%) | MFR (g / 10 min) | Mw/Mn |
|---|---|---|---|---|---|---|
| | (g-PP / mmol-Ti) | (g-PP / g-cat) | | | | |
| Ex. 1 | 4,580 | 2,100 | 99.1 | 0.58 | 1.49 | 3.24 |
| Ex. 2 | 6,350 | 2,520 | 99.3 | 0.28 | 1.60 | 3.25 |
| Comp. Ex. 1 | 8,880 | 4,080 | 98.8 | 0.61 | 1.05 | 4.72 |
| Comp. Ex. 2 | 5,000 | 2,300 | 98.3 | 1.28 | 3.9 | 4.91 |
| Comp. Ex. 3 | 9,890 | 3,840 | 98.9 | 0.88 | 1.20 | 4.62 |

Example 3

Preparation of prepolymerized catalyst

A prepolymerized catalyst wherein propylene was prepolymerized was prepared in the same manner as in Example 2, except that 10 mmol of triethylaluminum, 1.0 mmol (in terms of titanium atom) of the solid titanium catalyst component and 2 mmol of dicyclopropyldimethoxysilane were introduced.

Polymerization

Polymerization of propylene was carried out in the same manner as in Example 2, except that the above-obtained prepolymerized catalyst containing dicyclopropyldimethoxysilane was used in place of the prepolymerized catalyst.

The polymer was obtained as a white powder. Though the liquid phase was concentrated, no solvent-soluble polymer was obtained.

The polymerization activity of the whole polymer obtained, boiling-heptane extraction residue (t-II), 23°C n-decane-soluble component quantity (t-DS) and bulk density are set forth in Table 2.

Comparative Example 4

Polymerization of propylene was carried out in the same manner as in Example 3, except that dicyclopentyldimethoxysilane was used in place of the dicyclopropyldimethoxysilane in the stages of "preparation of prepolymerized catalyst" and "polymerization".

The yield of the white powder polymer was 84.1 g. Concentration of the liquid phase resulted in 0.1 g of a solvent-soluble polymer.

The polymerization activity of the whole polymer obtained, boiling-heptane extraction residue (t-II), 23°C n-decane-soluble component quantity (t-DS) and bulk density are set forth in Table 2.

Table 2

| | Polymerization activity | | t-II (wt%) | t-DS (wt%) | Bulk density (g/ml) |
|---|---|---|---|---|---|
| | (g-PP / mmol-Ti) | (g-PP / g-cat | | | |
| Ex. 3 | 19,200 | 6,400 | 99.3 | 0.28 | 0.41 |
| Comp. Ex. 4 | 10,500 | 2,970 | 99.2 | 0.57 | 0.42 |

**Claims**

**1.** An olefin polymerization catalyst comprising:

(A) a solid titanium catalyst component comprising magnesium, titanium, halogen and either a polycarboxylic acid ester or a polyether,
(B) an organoaluminum compound, and
(C) an organosilane compound of formula (1):

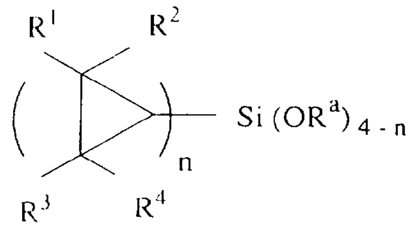

(1)

wherein n is 1 or 2; the groups $R^a$ are the same or different and each is methyl or ethyl; $R^1$, $R^2$, $R^3$ and $R^4$ are the same or different and each is hydrogen, halogen, alkyl, cycloalkyl, aryl, or aralkyl; and one of $R^1$ and $R^2$ together with one of $R^3$ and $R^4$ may form a ring together with the carbons to which they are bonded.

**2.** A prepolymerized catalyst obtained by prepolymerizing an olefin onto an olefin polymerization catalyst comprising:

(A) a solid titanium catalyst component comprising magnesium, titanium, halogen and either a polycarboxylic acid ester or a polyether,
(B) an organoaluminum compound, and
(C) an organosilane compound represented by the following formula (1):

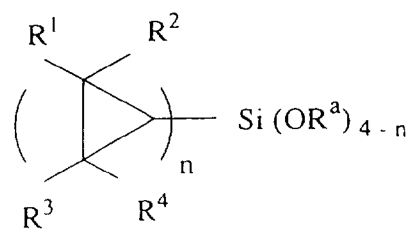

(1)

wherein n is 1 or 2; the groups $R^a$ are the same or different and each is methyl or ethyl; $R^1$, $R^2$, $R^3$ and $R^4$ are the same or different and each is hydrogen, halogen, alkyl, cycloalkyl, aryl, or aralkyl; and one of $R^1$ and $R^2$ together with one of $R^3$ and $R^4$ may form a ring together with the carbons to which they are bonded.

**3.** An olefin polymerization catalyst comprising: [Ia] a prepolymerized catalyst obtained by prepolymerizing an olefin onto an olefin polymerization catalyst comprising:

(A) a solid titanium catalyst component comprising magnesium, titanium, halogen and either a polycarboxylic acid ester or a polyether, and
(B) an organoaluminum compound;
[II] (C) an organosilane compound represented by the following formula (1):

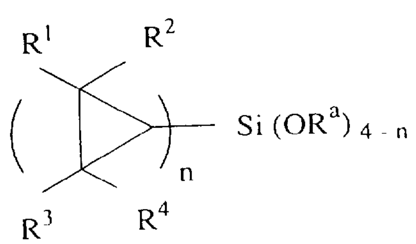

(1)

wherein n is 1 or 2; the groups $R^a$ are the same or different and each is methyl or ethyl; $R^1$, $R^2$, $R^3$ and $R^4$ are the same or different and each is hydrogen, halogen, alkyl, cycloalkyl, aryl, or aralkyl; and one of $R^1$ and $R^2$ together with one of $R^3$ and $R^4$ may form a ring together with the carbons to which they are bonded;
and optionally
[III] further organoaluminum compound which is the same as or different to (B).

**4.** An olefin polymerization catalyst comprising:

[Ib] the prepolymerized catalyst as claimed in claim 2;

[II] further organosilane compound which is the same as or different to (C) and is a compound of formula (1):

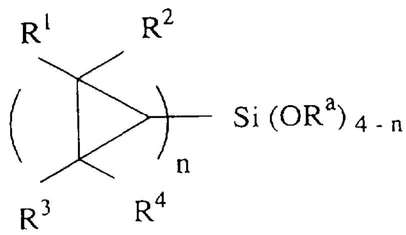

(1)

wherein n is 1 or 2; the groups $R^a$ are the same or different and each is methyl or ethyl; $R^1$, $R^2$, $R^3$ and $R^4$ are the same or different and each is hydrogen, halogen, alkyl, cycloalkyl, aryl, or aralkyl; and one of $R^1$ and $R^2$ together with one of $R^3$ and $R^4$ may form a ring together with the carbons to which they are bonded;

and optionally

[III] further organoaluminum compound which is the same or different to (B).

**5.** A catalyst according to any one of the preceding claims wherein one or more of groups $R^1$, $R^2$, $R^3$ and $R^4$ are straight or branched alkyl groups of 1 to 8 carbon atoms, or cycloalkyl groups of 3 to 8 carbon atoms.

**6.** A catalyst according to any one of the preceding claims wherein one or more of groups $R^1$, $R^2$, $R^3$ and $R^4$ are phenyl or benzyl.

**7.** An olefin polymerization process comprising polymerizing or copolymerizing an olefin in the presence of the olefin polymerization catalyst as claimed in any one of the preceding claims.

Fig. 1

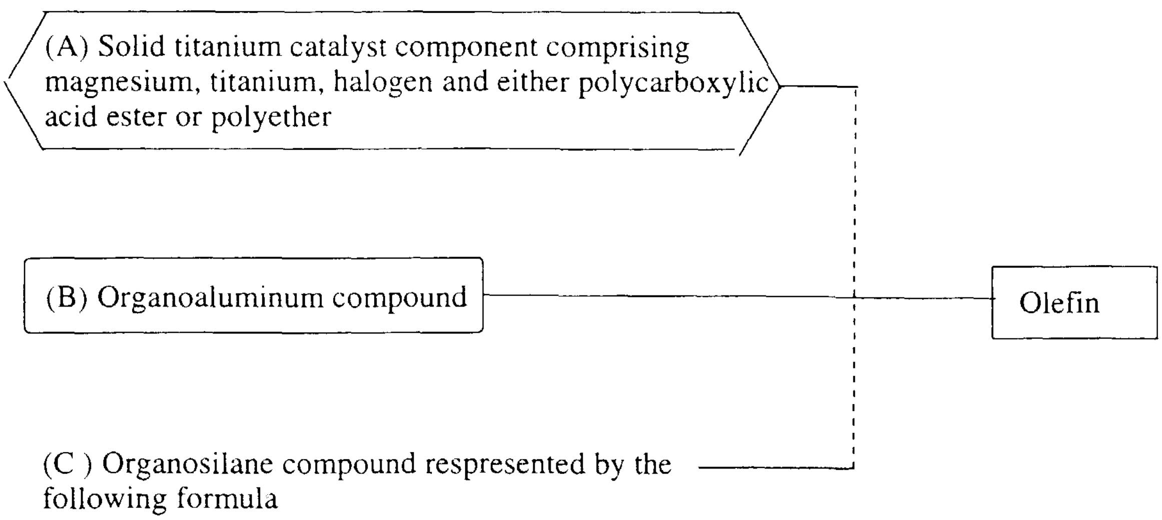
(A) Solid titanium catalyst component comprising magnesium, titanium, halogen and either polycarboxylic acid ester or polyether
(B) Organoaluminum compound
Olefin
(C ) Organosilane compound respresented by the following formula

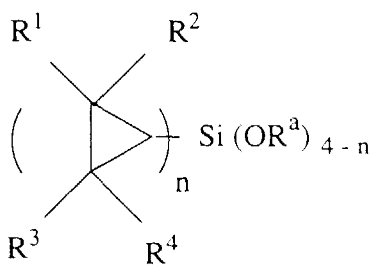

Fig. 2

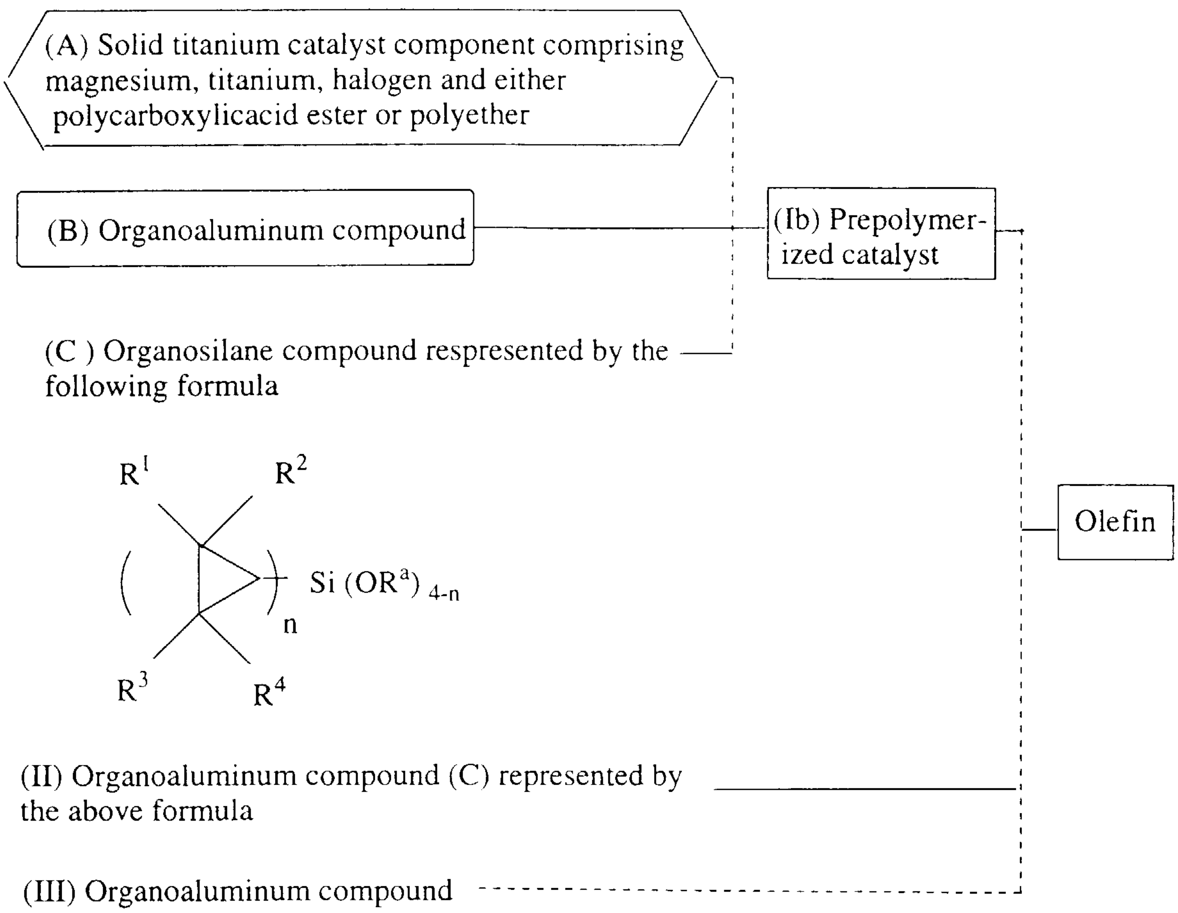

(A) Solid titanium catalyst component comprising magnesium, titanium, halogen and either polycarboxylicacid ester or polyether
(B) Organoaluminum compound
(Ib) Prepolymer-ized catalyst
(C ) Organosilane compound respresented by the following formula
Olefin
(II) Organoaluminum compound (C) represented by the above formula
(III) Organoaluminum compound

European Patent Office

# EUROPEAN SEARCH REPORT

Application Number
EP 97 30 9368

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | US 4 831 091 A (HARADA MASATO)<br>* column 2, line 27 - column 3, line 12 *<br>* column 8, line 5 - line 34 *<br>* column 8, line 48 *<br>--- | 1-3,7 | C08F10/00<br>C08F4/646<br>C08F4/654 |
| Y | EP 0 641 807 A (MITSUI)<br>* claims 4,7,10,13 *<br>* page 9, line 54 - line 58 *<br>* page 10, line 40 - line 50 *<br>* example 1 *<br>* example 1 *<br>----- | 1-3,7 | |
| | | | TECHNICAL FIELDS SEARCHED (Int.Cl.6) |
| | | | C08F |

The present search report has been drawn up for all claims

| Place of search | Date of completion of the search | Examiner |
|---|---|---|
| THE HAGUE | 9 February 1998 | Fischer, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)